# EUROPEAN PATENT APPLICATION

(11) **EP 4 651 565 A2**
(43) Date of publication of application: **19.11.2025**
(21) Application number: 25206774.9
(22) Date of filing: 24.09.2019
(51) Int. Cl.: H04W 36/36

(54) **UPLINK BASED FORWARD MOBILITY**

(30) Priority: 25.09.2018 US 201862736110 P; 12.02.2019 US 201962804327 P
(62) Divisional of application: 19783841.0
(71) Applicant: InterDigital Patent Holdings, Inc., Wilmington, DE 19809 (US)
(72) Inventor: NARAYANAN THANGARAJ, Yugeswar Deenoo, CHALFONT, 18914 (US); PELLETIER, Ghyslain, MONTREAL, H1X 3P2 (CA); HAJIR, Mouna, MONTREAL, H2W2G1 (CA)
(74) Representative: Interdigital

(57) **Abstract**

A wireless transmit/receive unit (WTRU) may communicate with a serving cell and monitor suitable non-serving cell(s) may be monitored. Uplink-based forward mobility may be performed. The WTRU may transmit control signaling that may indicate an ordered list of candidate target cell(s) using resources of the source cell. A resume procedure towards a non-serving cell may be initiated while in connected state with serving cell. Upon a successful resume in non-serving cell, the connection may be disconnected from the serving cell.

## Description

### BACKGROUND

Mobile communications using wireless communication continue to evolve. A fifth generation may be referred to as 5G or New Radio (NR). A previous generation of mobile communication may be, for example, fourth generation (4G) long term evolution (LTE). In wireless systems, such as 5G, a radio link between a wireless transmit/receive unit (WTRU) and a source cell may become unreliable during a mobility event. This may be due to a degradation in a quality of a source cell. And it may be desirable to perform mobility (e.g. a handover) before the radio link with the source cell becomes unreliable.

### SUMMARY

A wireless transmit/receive unit (WTRU) may perform uplink-based forward mobility (e.g., with minimal configuration from the serving cell). The WTRU may communicate with a serving cell and may monitor suitable non-serving cell(s). The WTRU may transmit control signals that may indicate an ordered list of candidate target cell(s) using resources of the source cell. A resume procedure towards a non-serving cell may be initiated while the WTRU may remain in a connected state with a serving cell. Upon a successful resume in non-serving cell, the connection may be disconnected from the serving cell.

For example, the WTRU may perform measurements on reference signals, assess load in the target frequency and/or channel occupancy, estimate the quality of the downlink reception and/or acquire cell-related information, to determine whether to initiate a forward mobility. The WTRU may initiate access using resources of a cell other than the serving cell (e.g., for performing a mobility procedure) when the WTRU has a sufficient configuration to initiate such access and/or to be identified in the non-serving cell. Upon receiving a positive response from the non-serving cell, the WTRU may continue the communication with the non-serving cell and may stop transmission/reception from the serving cell. If no response is received or if a negative response is received from the non-serving cell, the WTRU may continue transmission and/or reception with the source cell and may initiate uplink based forward mobility towards a different non-serving cell.

A method may be provided to perform uplink-based forward mobility. The method may be implemented in a WTRU, such that the WTRU may perform uplink-based forward mobility. The WTRU may comprise a memory and a processor. The processor may be configured to perform a number of actions. One or more neighbor cells may be monitored. It may be determined that an egress condition for a source cell and an ingress condition for a target cell may have been satisfied. The target cell may be a cell from the one or more neighbor cells. The egress condition may be a condition for leaving the source cell. The ingress condition may be a condition for entering the target cell. A resume request may be sent to the target cell when the egress condition and the ingress condition have been satisfied. A connection to the source cell may be maintained. For example, a connection to the source cell may be maintained while the resume request is sent to the target cell. As another example, a connection to the source cell may be maintained until a resume response indicates that a resume procedure with the target cell is successful. The resume response may be received from the target cell.

A method may be provided to perform uplink-based forward mobility based on one or more cell conditions. The method may be implemented in a WTRU, such that the WTRU may perform uplink-based forward mobility. The WTRU may comprise a memory and a processor. The processor may be configured to perform a number of actions. One or more neighbor cells may be monitored. For example, the neighbor cell may be monitored for cell conditions. It may be determined that a first condition (e.g. a first cell condition), which may be for leaving a source cell, may have been satisfied. It may be determined that a second condition (e.g. a second cell condition), which may be for entering a target cell may have been satisfied. The target cell may be a cell from the one or more neighbor cells. When the first cell condition and the second cell condition are satisfied, a resume request may be sent to the target cell. The resume request may request a connection to the target cell. A connection to the source cell may be maintained. For example, a connection to the source cell may be maintained while the resume request is sent to the target cell. As another example, a connection to the source cell may be maintained until a resume response indicates that a resume procedure with the target cell is successful. As another example, a connection to the source cell may be maintained until a connection to the target cell has been established. The resume response may be received from the target cell.

### BRIEF DESCRIPTION OF THE DRAWINGS

FIG. 1A is a system diagram illustrating an example communications system in which one or more disclosed embodiments may be implemented.
FIG. 1B is a system diagram illustrating an example wireless transmit/receive unit (WTRU) that may be used within the communications system illustrated in FIG. 1A according to an embodiment.
FIG. 1C is a system diagram illustrating an example radio access network (RAN) and an example core network (CN) that may be used within the communications system illustrated in FIG. 1A according to an embodiment.
FIG. 1D is a system diagram illustrating a further example RAN and a further example CN that may be used within the communications system illustrated in FIG. 1A according to an embodiment.
FIG. 2 shows an example diagram for providing uplink based forward mobility.
FIG. 3 shows an example embodiment for providing simultaneous connectivity and WTRU behavior related to source connection maintenance after a HO command may be received.
FIG. 4 shows an example embodiment for providing uplink based forward mobility and WTRU behavior during simultaneous connectivity that may occur.

### DETAILED DESCRIPTION

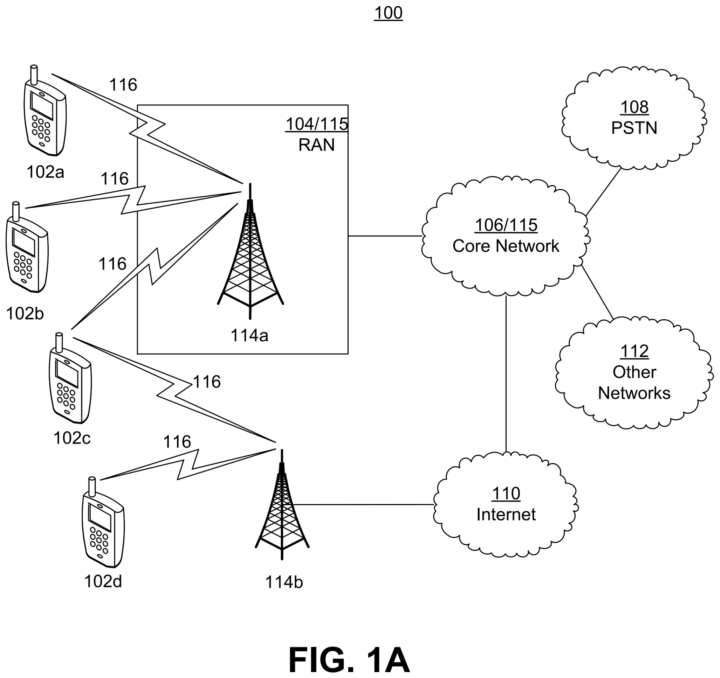

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

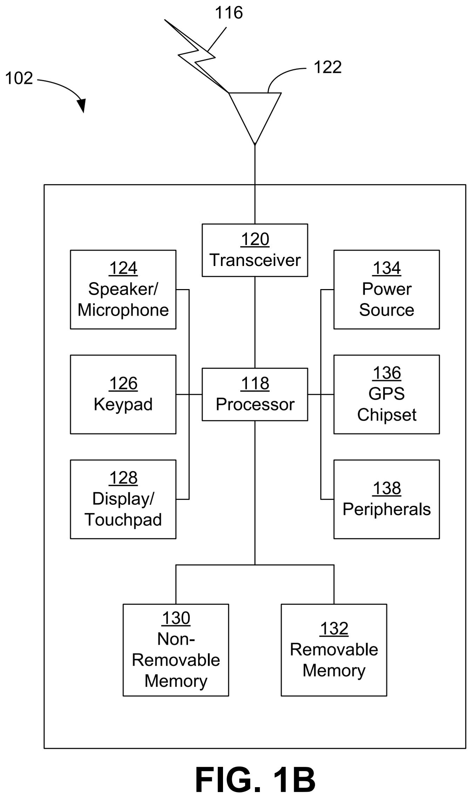

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 100 102 may include a half-duplex radio for which transmission and reception of some or all of the signals (e.g., associated with particular subframes for either the UL (e.g., for transmission) or the downlink (e.g., for reception)).

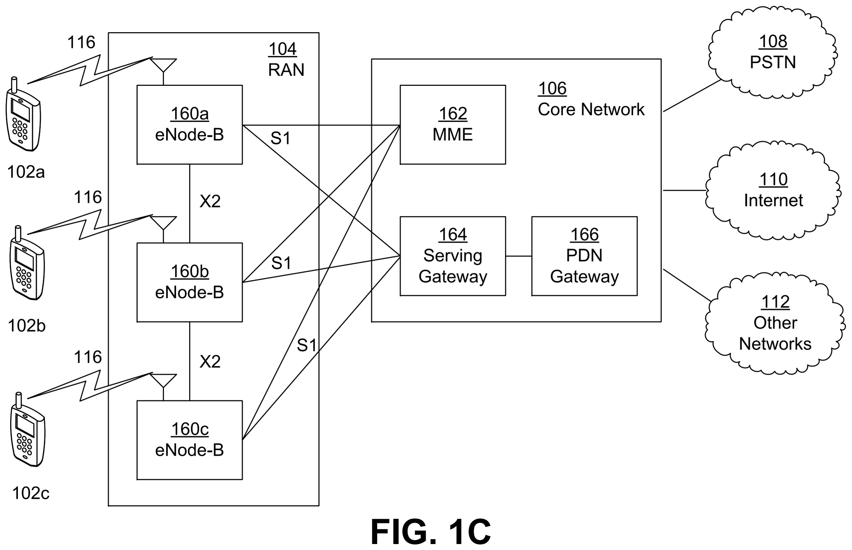

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11 af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11 ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11 ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

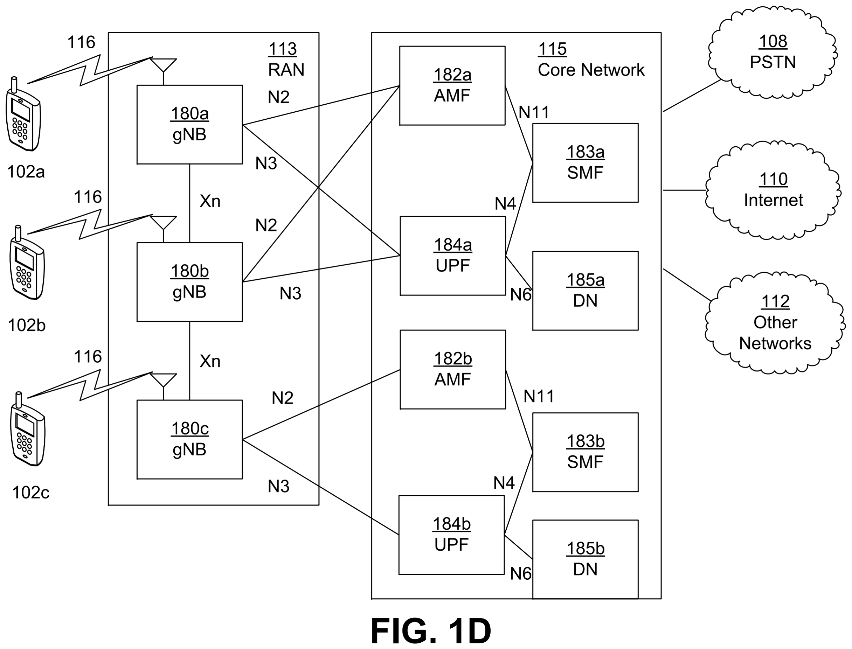

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

Table 1 is a list of acronyms that may be used herein.

**TABLE 1**

| | |
|---|---|
| Δf | Sub-carrier spacing |
| 5gFlex | 5G Flexible Radio Access Technology |
| 5gNB | 5GFlex NodeB |
| ACK | Acknowledgement |
| BRS | Beam Reference Signal |
| BLER | Block Error Rate |
| BTI | Basic TI (in integer multiple of one or more symbol duration) |
| CB | Contention-Based (e.g. access, channel, resource) |
| CBRA | Contention Based Random Access |
| CFRA | Contention Free Random Access |
| CoMP | Coordinated Multi-Point transmission/reception |
| CP | Cyclic Prefix |
| CP-OFDM | Conventional OFDM (relying on cyclic prefix) |
| CQI | Channel Quality Indicator |
| CN | Core Network (e.g. LTE packet core) |
| CRC | Cyclic Redundancy Check |
| CSI | Channel State Information |
| CU | Central Unit |
| CSG | Closed Subscriber Group |
| D2D | Device to Device transmissions (e.g. LTE Side link) |
| DCI | Downlink Control Information |
| DL | Downlink |
| DM-RS | Demodulation Reference Signal |
| DRB | Data Radio Bearer |
| DU | Distributed Unit |
| EPC | Evolved Packet Core |
| FBMC | Filtered Band Multi-Carrier |
| OQAM | Offset Quadrature Amplitude Modulation |
| FDD | Frequency Division Duplexing |
| FDM | Frequency Division Multiplexing |
| ICC | Industrial Control and Communications |
| ICIC | Inter-Cell Interference Cancellation |
| IS | In-Sync |
| IP | Internet Protocol |
| LAA | License Assisted Access |
| LBT | Listen-Before-Talk |
| LCH | Logical Channel |
| LCP | Logical Channel Prioritization |
| LLC | Low Latency Communications |
| LTE | Long Term Evolution e.g. from 3GPP LTE R8 and up |
| MAC | Medium Access Control |
| NACK | Negative ACK |
| NS | No-Sync |
| MBB | Massive Broadband Communications |
| MC | Multi-Carrier |
| MCS | Modulation and Coding Scheme |
| MIMO | Multiple Input Multiple Output |
| MTC | Machine-Type Communications |
| NAS | Non-Access Stratum |
| NR | New Radio access technology |
| OFDM | Orthogonal Frequency-Division Multiplexing |
| OOB | Out-Of-Band (emissions) |
| OOS | Out-Of-Sync |
| PBR | Prioritized Bit Rate |
| P_{cmax} | Total available UE power in a given TI |
| PHY | Physical Layer |
| PRACH | Physical Random Access Channel |
| PDU | Protocol Data Unit |
| PER | Packet Error Rate |
| PL | Path Loss (Estimation) |
| PLMN | Public Land Mobile Network |
| PLR | Packet Loss Rate |
| PSS | Primary Synchronization Signal |
| QoS | Quality of Service (from the physical layer perspective) |
| RAB | Radio Access Bearer |
| RAN PA | Radio Access Network Paging Area |
| RACH | Random Access Channel (or procedure) |
| RAR | Random Access Response |
| RCU | Radio access network Central Unit |
| RF | Radio Front end |
| RLF | Radio Link Failure |
| RLM | Radio Link Monitoring |
| RMSI | Remaining System Information |
| RNTI | Radio Network Identifier |
| RP | Resource Pool |
| RPI | Resource Pool Indication |
| RRC | Radio Resource Control |
| RRM | Radio Resource Management |
| RS | Reference Signal |
| RTT | Round-Trip Time |
| SCMA | Single Carrier Multiple Access |
| SDU | Service Data Unit |
| SL | Side link |
| SOM | Spectrum Operation Mode |
| SS | Synchronization Signal |
| SSS | Secondary Synchronization Signal |
| SRB | Signaling Radio Bearer |
| SUL | Supplementary Uplink |
| SWG | Switching Gap (in a self-contained subframe) |
| TB | Transport Block |
| TBS | Transport Block Size |
| TDD | Time-Division Duplexing |
| TDM | Time-Division Multiplexing |
| TI | Time Interval (in integer multiple of one or more BTI) |
| TTI | Transmission Time Interval (in integer multiple of one or more TI) |
| TRP | Transmission / Reception Point |
| TRPG | TRP Group |
| TRx | Transceiver |
| UFMC | Universal Filtered Multi-Carrier |
| UF-OFDM | Universal Filtered OFDM |
| UL | Uplink |
| URC | Ultra-Reliable Communications |
| URLLC | Ultra-Reliable and Low Latency Communications |
| V2V | Vehicle to vehicle communications |
| V2X | Vehicular communications |
| WLAN | Wireless Local Area Networks and related technologies (e.g., IEEE 802.xx domain) |

The following description is for exemplary purposes and does not intend to limit in any way the applicability of the methods described further herein to other wireless technologies and/or to wireless technology using different principles, when applicable.

A network may include and may refer to one or more gNBs that may be associated with one or more Transmission/Reception Points (TRPs) or any other node in the radio access network.

Shared spectrum may include or may refer to spectrum that may be shared between multiple operators and/or multiple technologies (e.g. 3GPP, WiFi, radar, satellite, etc.). Shared spectrum may include lightly licensed spectrum, licensed spectrum that is shared between operators, and/or unlicensed spectrum. The terms shared spectrum and unlicensed spectrum may be used interchangeably in this disclosure.

LTE Advanced Pro and a New Radio (NR) may support a wide range of use cases with varying service requirements (e.g. low overhead low data rate power efficient services (mMTC), ultra-reliable low latency services (URLLC), high data rate mobile broadband services (eMBB), and the like), for diverse user equipment (UE) capabilities (e.g. low power low bandwidth WTRUs, WTRUs capable of very wide bandwidth e.g. 80Mhz, WTRUs support for high frequencies e.g. >6Ghz, and the like), with different spectrum usage models (e.g. licensed, unlicensed/shared, and the like), under various mobility scenarios (e.g. stationary/fixed, high speed trains, and the like) using an architecture that may be flexible enough to adapt to diverse deployment scenarios (e.g. standalone, non-standalone with assistance from a different air interface, centralized, virtualized, distributed over ideal/non-ideal backhaul, and the like).

In NR, a WTRU may operate using bandwidth parts (BWPs) in a carrier. The WTRU may access the cell using an initial BWP. It may be configured with a set of BWPs to continue operation. At a given moment, a WTRU may have an active BWP. A BWP may be configured with a set of CORESETs within which a WTRU may blind decode PDCCH candidates for scheduling, among other things.

Beamforming may compensate increased path-loss at higher frequencies (e.g. >6 GHz). A large number of antenna elements may be used to achieve higher beamforming gain.

Analog and/or hybrid beamforming may be used to reduce implementation cost (e.g., reduce the number of RF chains). Analog/hybrid beams may be multiplexed in time. Beamforming may be applied for Sync and/or physical broadcast channel (PBCH) and/or control channels to provide cell wide coverage. The term beam sweep in this disclosure may refer to transmission/reception of beamformed channels multiplexed in time, frequency, and/or space.

Reference signal may include or refer to a signal, preamble or system signature that may be received and/or transmitted by the WTRU for one or more of the purposes described herein. Different reference signals may be defined for beam management in the DL and UL. For example, the downlink beam management may use CSI-RS, DMRS, synchronization signal, and the like. For example, the uplink beam management may use SRS, DMRS, RACH and/or similar.

Handover success rate may depend on the weakest link in the chain of handover (HO) message flow (e.g., the WTRU-source link). The radio link between WTRU and a source cell may become unreliable during a mobility event, as handover may be triggered based on degradation in source cell quality. In unlicensed spectrum, it may be desirable to perform mobility when the channel occupancy in the source cell increases, as accessing the channel may incur additional latency.

A target cell for handover may be determined based on DL measurements. There may be an asymmetry (e.g. a significant asymmetry) in UL/DL links for example, due to lack of beam correspondence, due to different interference pattern in DL and UL due to beamforming, and/or due to asymmetry in the characteristic of deployment (e.g. one of the deployment scenarios for NR-U is DL in unlicensed band and UL in licensed band).

Due to high propagation loss at high frequencies, multi-beam ultra-dense deployments may be employed to provide required coverage. One impact of beamforming may be that a WTRU may report both beam-based measurements and cell-level measurement results. The network may configure measurement events/thresholds. At high frequencies, the quality of beams may change dynamically due to blockage/environment changes.

Without limiting the applicability of the methods, systems, and apparatus described herein, the embodiments may be applicable to functions involved in a number of wireless system, such as, for example, LTE and/or NR operating in any type of spectrum such as shared spectrum, licensed, or unlicensed spectrum. The terms forward mobility, uplink mobility, and uplink based forward mobility may be used interchangeably herein. Forward mobility may include a WTRU operating on a potential target frequency before stopping its operation on a source frequency.

Critical handover signaling (e.g. measurement report, HO command(s), etc.) may be provided with robustness for a mobility procedure, such as a high frequency mobility procedure. Handover signaling (e.g. measurement report, HO command(s), etc.) may be transmitted in time. HO may be based on a DL measurement and/or other information in cases of asymmetric UL/DL links. Mobility configuration signaling, frequent measurement reporting, and/or the like may be sent in beamformed ultra-dense network.

Preparation for a WTRU-based forward mobility may be performed. Such operation in the target frequency may include performing measurements on reference signals, assessing load in the target frequency and/or channel occupancy (e.g., for unlicensed channels), estimating the quality of the PDCCH reception, and/or acquiring cell-related information (e.g., MIB, SIB). The WTRU may determine whether or not to complete a forward mobility procedure based on one or more determination factor(s). The determination factor(s) may include measurements on reference signals in the target frequency, load in the target frequency and/or channel occupancy (e.g., for unlicensed channels) in the target frequency, the quality of the PDCCH reception in the target frequency, and/or cell-related information (e.g., MIB, SIB) in the target frequency. Such operation(s) may be performed over a period of time. The period of time may correspond to an operating gap (possibly including time to transit from one frequency to the other) in the source frequency or a fraction thereof (e.g. in case a WTRU operates on multiple candidate target frequencies for each such period of time). Such operation(s) may occur for such a period of time using a time-division multiplexing approach between one source frequency and one or more candidate target frequency. The period of time and/or the rules that determine when and/or in what candidate target frequenc(y/ies) the WTRU may operate when assessing whether or not to complete a forward mobility procedure may be a configuration aspect of the WTRU. For example, it may be configured by L3/RRC signaling.

WTRU-based forward mobility may be executed. The WTRU may initiate reception of downlink control signaling if the WTRU determines to execute forward mobility. The WTRU may also transmit a measurement report.

In an example, the WTRU may transmit control signaling that may indicate an ordered list of candidate target cell(s), for example a measurement report, using resources of the source cell. For example, the WTRU may initiate reception of PDCCH in one (or more) of the reported target cell for a downlink data transmission. The initiation may be based on the measured quality of the target candidate. For example, the WTRU may initiate reception in the target cell upon determining that the network has received (e.g. successfully received) the measurement report.

The WTRU may stay connected in the source cell (e.g., with the serving cell) and may initiate access in a target cell for a HO command. In an example, the WTRU may initiate an access in one or more candidate target cells. The one or more candidate cells may be determined based on measurements. For example, the WTRU may initiate a random access procedure in a candidate target cell. The WTRU may include information that may allow the network to identify the WTRU, for example by including an identity of the WTRU (such as an identity used for the resume procedure) and/or using dedicated PRACH resources. The WTRU may include a request such as a reconfiguration request for mobility. The WTRU may monitor PDCCH for reception of a downlink data transmission.

A downlink data transmission may include a reconfiguration of the WTRU, which may be similar to an RRC reconfiguration with control information for mobility, such as a handover command. The WTRU may send a complete message using resources of the target cell in response to the reconfiguration, if the WTRU may comply and/or if the WTRU is successful. The WTRU may send the complete message using resources of the source cell, for example, to inform of the mobility to target and/or the release of the physical layer connection to the source cell.

A WTRU may perform uplink based forward mobility. The WTRU may be connected to a serving cell and may initiate an access using resources of a cell other than the serving cell (e.g., for performing a mobility procedure) when the WTRU has at least a sufficient configuration to initiate such access and/or to be identified in the non-serving cell. For example, the WTRU may initiate such access when a preconfigured criterion may be satisfied. For example, such configuration may include a serving frequency, a cell identity, and the like. For example, such identification may be based on a configured identity for the WTRU, for example, a RAN-area specific identity. The identification may uniquely identify the WTRU context.

Upon receiving a positive response from the non-serving cell, the WTRU may continue the communication with the non-serving cell and may stop transmission/reception from the serving cell. Upon receiving no response, or a negative response from the non-serving cell, the WTRU may continue transmission/reception with the source cell and/or may initiate uplink based forward mobility towards a different non-serving cell. The WTRU may perform transmission (and/or reception) with the non-serving cell during measurement gaps configured by the serving cell.

A method may be provided to perform uplink-based forward mobility. The method may be implemented in a WTRU, such that the WTRU may perform uplink-based forward mobility. The WTRU may comprise a memory and a processor. The processor may be configured to perform a number of actions. One or more neighbor cells may be monitored. It may be determined that an egress condition for a source cell and an ingress condition for a target cell may have been satisfied. The target cell may be a cell from the one or more neighbor cells.

The ingress condition may be a condition for entering the target cell. The ingress condition may be based on at least one or more of an absence of a measurement reporting configuration, a mobility configuration, a radio access network (RAN) area configuration, a lack of response to a measurement report, an indication in a broadcast signal received from a neighbor cell from the one or more neighbor cells, a quality of a cell, and the like. A WTRU may determine if one or more ingress conditions may be satisfied. For example, a WTRU may determine if a first ingress condition may be satisfied, and if a second ingress condition may be satisfied. The first ingress condition may be for a source cell and the second ingress condition may be for the same source cell or a different source cell.

The egress condition may be a condition for leaving the source cell. The egress condition may be based on at least one or more of a quality of a serving cell, a status of a radio link monitoring process, a channel occupancy of a serving cell, and the like. A WTRU may determine if one or more egress conditions may be satisfied. For example, a WTRU may determine if a first egress condition may be satisfied, and if a second egress condition may be satisfied. The first egress condition may be for a first target cell and the second egress condition may be for a second target cell. For example, the WTRU may receive a resume response from the first target cell that indicates a resume procedure may have failed, and the WTRU may send a resume response to a second target cell upon determining that the second egress condition for the second target cell may be satisfied.

A resume request may be sent to the target cell when the egress condition and the ingress condition have been satisfied. A connection to the source cell may be maintained. For example, a connection to the source cell may be maintained while the resume request is sent to the target cell. As another example, a connection to the source cell may be maintained until a resume response indicates that a resume procedure with the target cell is successful.

A resume response may be received from the target cell. The resume response may indicate that a resume procedure with the target cell may have been successful. The WTRU may disconnect from the source cell. For example, the WTRU may disconnect from the source cell on condition that the resume response received from the target cell indicates that a resume procedure with the target cell may have been successful. As another example, the WTRU may disconnect from the source cell based on the resume response indicating that the resume procedure with the target cell may have been successful.

The resume response may indicate that a resume procedure with the target cell may not have been successful. For example, the resume response may indicate that a resume procedure with the target cell may have failed. On condition that the resume response indicates that the resume procedure may not have been successful, the WTRU may attempt to connect to a second target cell. For example, the WTRU may determine that an egress condition for the second target cell has been met and that the ingress condition for the source cell has been met. The WTRU may send the second target cell a resume request when the egress condition for the second target cell and the ingress condition for the source cell have been met.

A method may be provided to perform uplink-based forward mobility based on one or more cell conditions. The method may be implemented in a WTRU, such that the WTRU may perform uplink-based forward mobility. The WTRU may comprise a memory and a processor. The processor may be configured to perform a number of actions. A connection may be established to a source cell. One or more neighbor cells may be monitored. For example, the neighbor cell may be monitored for cell conditions. It may be determined that a first cell condition, which may be a condition for leaving the source cell, may have been satisfied. It may be determined that a second cell condition, which may a condition for entering a target cell, may have been satisfied. The target cell may be a cell from the one or more neighbor cells. When the first cell condition and the second cell condition is satisfied, a resume request may be sent to the target cell. The resume request may request a connection to the target cell. A connection to the source cell may be maintained.

For example, maintaining the connection to the source cell may comprise at least one of sending a data transmission to the source cell, receiving a data transmission from the source cell, and performing radio link monitoring (RLM) of the source cell. As another example, maintaining the connection to the source cell may comprise performing a radio link monitoring (RLM) of the source cell and adjusting a power based on a priority for a data transmission to the source cell. As another example, a connection to the source cell may be maintained while the resume request is sent to the target cell. As another example, a connection to the source cell may be maintained until a resume response indicates that a resume procedure with the target cell is successful. As another example, a connection to the source cell may be maintained until a connection to the target cell has been established.

The resume response may be received from the target cell. A data session may have been initiated with the source cell via the connection to the source cell. For example, the data session may have been initiated with the source cell before the WTRU sends a resume request to the target cell. On a condition that the resume response from the target cell indicates that a resume procedure with the target cell is successful, the WTRU may continue the data session with the target cell and may terminate the connection to the source cell.

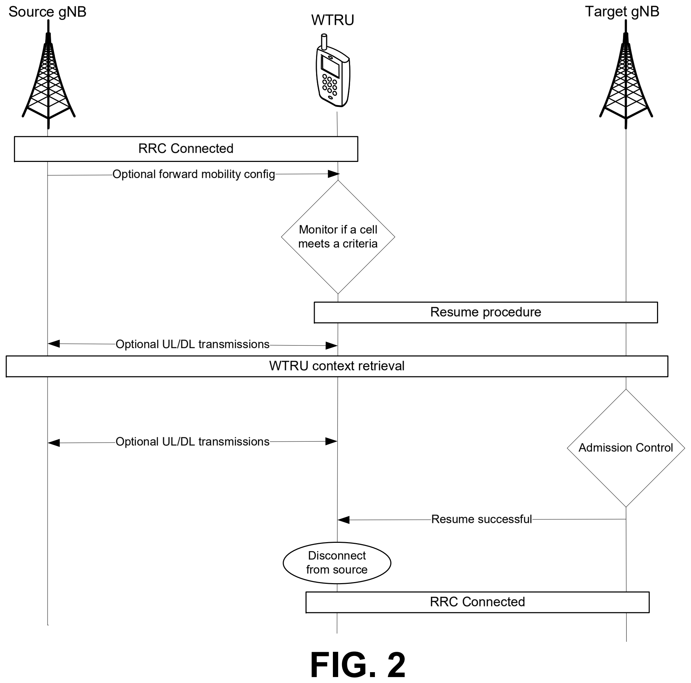

FIG. 2 shows an example diagram for providing uplink based forward mobility. As shown in FIG. 2, a WTRU may be connected (e.g. RRC connected) to source gNB. Source gNB may forward a mobility configuration to the WTRU. The WTRU may monitor if a cell meets a criteria. For example, the WTRU may monitor if the cell that includes a target gNB may meet a criterion. A resume procedure may occur between the WTRU and the target gNB. UL/DL transmissions may occur between the WTRU and the source gNB. A WTRU context may be retrieved. The WTRU context may be retrieved from the source gNB, the WTRU, and/or the target gNB. The WTRU context may be send to the source gNB, the WTRU, and/or the target gNB. UL/DL transmissions may occur between the WTRU and the source gNB. The target gNB may perform admission control. The target gNB may send a message to WTRU to notify the WTRU that the resume procedure may have been successful. The WTRU may disconnect from the source. For example, the WTRU may disconnect from the source gNB. The WTRU may be connected (e.g. RRC connected) to target gNB.

As shown, a WTRU, while connected to the source gNB, may receive forward mobility configuration information that may inform the WTRU that forward mobility may be allowed. The forward mobility configuration may indicate a RAN-area level identity. The forward mobility configuration may be provided as a part of RRC message for RRC connection setup, reconfiguration messages, and the like. The WTRU may monitor for one or more potential candidate non-serving cells based on a criterion. Upon identifying a candidate cell, the WTRU may trigger a UL access (e.g. resume request) towards a non-serving cell, while still maintaining a connection to a source cell. If a positive response (e.g. resume) is received from the non-serving cell, the WTRU may disconnect from the source cell and enter a connected state in the target cell.

The uplink based forward mobility described herein may be employed in cases of dual connectivity. For example, the WTRU may be configured with different modes of mobility procedure in different legs of dual connectivity. For example, the WTRU may perform forward mobility in the secondary layer (e.g. small cells) and may perform network-controlled mobility (e.g., legacy network-controlled mobility) in the master layer (e.g. macro cell). For example, the WTRU may be configured by the master gNB to perform uplink based forward mobility for the small cell layer.

Embodiments described herein may provide uplink based forward mobility. The uplink based forward mobility may shift the handover signaling (e.g. critical handover signaling) from a weak WTRU-source link to a reliable WTRU-target link. The uplink based forward mobility may support asymmetric UL/DL links. For example, uplink based forward mobility may be declared successful when (e.g., only when) DL response from target is received, which may confirm (e.g. implicitly confirm) that the UL link between WTRU and target is working. The WTRU may confirm that the PDCCH monitoring/decoding in the target cell is successful.

Uplink based forward mobility may reduce handover preparation overhead. For example, a measurement configuration from a source cell, and/or measurement reporting to the source cell or serving cell may be skipped. The WTRU may access (e.g. directly access) a beam (e.g. a best beam) or a bandwidth part (BWP) on the target cell (e.g., without having to wait for a source cell to confirm). The forward mobility may be robust to changes (e.g. quick changes) to target cell beams.

Uplink based forward mobility may be optimized for centralized RAN architectures, which may lead to efficient WTRU context sharing across several RAN nodes. For example, the WTRU context may be stored in a CU and a WTRU may perform forward mobility among different DUs which may share the CU.

A serving cell may configure a WTRU to enable uplink based forward mobility. The WTRU may determine that the WTRU may perform uplink based forward mobility upon receiving a configuration from the network. The network configuration may include one or more of an egress configuration, a characteristic of a measurement object, and/or the like.

The WTRU may be configured with an egress configuration that may indicate a condition with respect to the source cell that be requested to be satisfied for the WTRU to start a forward mobility procedure. The condition indicated in an egress configuration may be based on the quality of the serving cell, the status of radio link monitoring process, the channel occupancy of the serving cell, and/or the like.

The condition indicated in an egress configuration may be based on the quality of the serving cell. The WTRU may be configured to perform forward mobility on a condition that the quality (e.g. RSRP ,RSRQ, SINR, and the like) of the serving cell is below a threshold. The WTRU may be configured to prioritize the forward mobility (e.g., over transmission of measurement report to the serving cell), if the quality of serving is below a threshold.

The condition indicated in an egress configuration may be based on a status of radio link monitoring process. The WTRU may be configured to perform forward mobility based on the status of radio link monitoring status associated with serving cell. For example, the WTRU may be configured to perform forward mobility when an OOS counter is above a threshold, a T310 timer is running, a T310 timer is close to expiry, and/or the like. The WTRU may be configured to prioritize the forward mobility (e.g., over transmission of measurement report to the serving cell).

The condition indicated in an egress configuration may be based on the channel occupancy of the serving cell. The WTRU may be configured to perform forward mobility if the channel occupancy of the serving cell is above a threshold.

The configuration, which may be received from a serving cell, may be based on a characteristic of a measurement object. The WTRU may perform uplink based forward mobility towards a non-serving cell, if at least one measurement object is not associated with a measurement configuration or a conditional handover configuration.

The configuration, which may be received from a serving cell, may be based on a received WTRU identifier. For example, the WTRU may implicitly infer that uplink based forward mobility is allowed, when a RAN-area level identity is provided to the WTRU while in CONNECTED mode (e.g. in an RRC setup or reconfiguration message).

The configuration, which may be received from a serving cell, may be based on an availability of a measurement gap. For example, the WTRU may implicitly infer that uplink based forward mobility is allowed, when a suitable measurement gap is configured. The measurement gap may be specific to forward mobility.

Potential candidate cells for forward mobility may be determined. A WTRU may be preconfigured with measurement objects. A measurement object may be associated with a frequency carrier. The WTRU may perform measurements on the configured measurement object. The WTRU may determine whether a cell may be a candidate for forward mobility based on one of more of an absence of a measurement reporting configuration, a configuration (e.g. an explicit configuration), a RAN area configuration, a lack of response to a measurement report, an ingress configuration from non-serving cell, and/or the like.

The WTRU may determine whether a particular cell is a candidate for forward mobility based on an absence of a measurement reporting configuration. The WTRU may consider a non-serving cell as a candidate for forward mobility if a preconfigured condition is satisfied, and a measurement report associated with an event (and/or measurement object) is not configured. For example, upon determining that the WTRU is configured with a measurement object that may not be associated with a reporting configuration, the WTRU may trigger forward mobility.

The WTRU may determine whether a particular cell is a candidate for forward mobility based on a configuration (e.g. an explicit configuration). For example, the WTRU may be explicitly configured with a list of cells towards which forward mobility is allowed (e.g. a whitelist configuration). The WTRU may be configured with a list of blacklisted cells towards which forward mobility is not allowed (e.g. a blacklist configuration). The WTRU may be configured with a list of RAN areas within which forward mobility is allowed.

The WTRU may determine whether a particular cell is a candidate for forward mobility based on a RAN area configuration. The WTRU may consider a cell within the same RAN area as the serving cell as a candidate for forward mobility. The WTRU may consider a cell which may identify the WTRU based on an identity provided during uplink access in the non-serving cell.

The WTRU may determine whether a particular cell is a candidate for forward mobility based on a lack of response to a measurement report. The WTRU may be configured to perform forward mobility towards a target when a predefined time has elapsed since a measurement report associated with a non-serving cell was transmitted, and no handover command was received. The WTRU may be configured with a subset of measurement events for which the forward mobility action may be performed. The WTRU may be configured with a subset of measurement objects and/or reporting configurations for which the forward mobility action may be performed.

The WTRU may determine whether a cell is a candidate for forward mobility based on an ingress configuration from a non-serving cell. The WTRU may determine whether a non-serving cell is a potential candidate for forward mobility based on an indication in the broadcast signaling received from a non-serving cell. For example, broadcast signaling may indicate an ingress configuration, e.g. the minimum quality of a non-serving cell that may need to be satisfied for forward mobility. The ingress configuration may be specific to a serving cell to which the WTRU is connected.

Forward mobility may be triggered based on one or more measurements. A WTRU may be configured with different behaviors as a function of relative quality difference between a serving cell and a non-serving cell (e.g. a specific non-serving cell).

For example, if a non-serving cell may be better than a source cell, and the source cell may be above a threshold, the WTRU may transmit a measurement report to the serving cell and attempt an uplink based forward mobility (e.g. a best effort uplink based forward mobility). A best effort may be configured in terms of a number of measurement gaps consumed for uplink mobility and/or a maximum time for uplink access attempt in the non-serving cell. The behavior may be configured, if the non-serving cell has further desirable qualities, such as, for example having a number of good beams higher than the serving cell, having a channel occupancy lower than serving cell, and/or the like. For example, a number of good beams in a non-serving cell may be higher than a number of good beams in a serving cell. A good beam may be a beam whose measurement result may be above a threshold (RSRP, RSRQ, SINR, and the like). A non-serving cell may have one or more beams above a threshold (e.g. three beams), while a serving cell may not have as many beams (e.g. two beams) above the threshold.

For example, if the serving cell is lower than a threshold and a non-serving cell is above a threshold, the WTRU may attempt a best effort uplink based forward mobility (e.g., without a measurement report to the serving cell). As another example, if the serving cell is lower than a threshold and multiple non-serving cells are above a threshold, the WTRU may attempt forward mobility towards the best non-serving cell in terms of signal quality, channel occupancy and/or number of good beams, until success or RLF whichever is earlier. As another example, if the serving cell is lower than a threshold, no non-serving cell is above a threshold, and one or more non-serving cells are detected, the WTRU may attempt uplink based forward mobility towards the best non-serving cell in terms of at least one or more of a signal quality, a channel occupancy, and/or a number of good beams, until success or RLF whichever may be earlier.

The WTRU may send UL signaling in the serving cell for forward mobility. When the WTRU is experiencing DL problems in the serving cell (e.g. RLF due to N310 OOS indications), the uplink may still remain robust (e.g. sufficiently robust) to allow the source cell to be informed about the radio link problem. The WTRU may send an uplink indication.

The failure of the downlink while the uplink may still be suitable may be due to differences in UL and DL configuration for a WTRU. For example, UL BWP configured for a WTRU may have better propagation conditions than DL BWP, a configuration of supplementary uplink, a configuration where the DL is operating in unlicensed and the UL in licensed, the non-correspondence of UL and DL beams, and/or the like.

The uplink indication may include the Cell ID of the non-serving cell where the WTRU may perform a forward handover. The indication may further include the identity of one more measured beams (e.g. the best measured beams). The indication may permit the source cell to prepare the non-serving cell for the handover of the WTRU, as well as to forward the data not transmitted to the WTRU. The indication may permit the non-serving cell to transmit to the WTRU a dedicated configuration (e.g. CFRA resources) to perform the random access or to notify the selected target cell whether it may accept or reject the WTRU. The indication may permit the non-serving cell to transmit a redirection to the WTRU towards another target cell.

The WTRU may monitor a non-serving cell for a handover command. The WTRU may indicate (e.g., in a measurement report) to the serving cell that the non-serving cell is a candidate target cell. For example, the WTRU may be configured to monitor the non-serving cell for the handover command when a handover command is not received from the serving cell within a time (e.g., a preconfigured time) after transmission of the indication. The WTRU may be configured to monitor the non-serving cell when the serving cell quality deteriorates, which may be determined based on one or more of a status of radio link monitoring, a serving cell quality measurement, a control channel performance, and the like.

The WTRU may monitor the non-serving cell during one or more time periods in which the reception of serving cell signals does not occur (e.g., measurement gaps). The WTRU may be preconfigured by the serving cell with a coreset and a search space associated with the non-serving cell to monitor for the handover command. For example, the WTRU may use the same CRNTI as it uses for the serving cell to monitor PDCCH in the non-serving cell. For example, the WTRU may be configured to monitor a preconfigured RNTI (e.g., which may be reserved for forward mobility). The WTRU identity (e.g., CRNTI in the serving cell) and the identity of the serving cell may be signaled in the handover command to identify the WTRU (e.g., during forward mobility).

The WTRU may be configured to derive a security context associated with the non-serving cell, for example based on one or more of the physical cell ID, carrier frequency of the non-serving cell, a next-hop value preconfigured by the serving cell, and the like. The WTRU may use the security context associated with the non-serving cell to decipher and/or verify the integrity of the handover command received from the non-serving cell. If the integrity check of the handover command fails, the WTRU may ignore the handover command and continue operation with the serving cell. The WTRU may stop monitoring the failed non-serving cell for uplink-based forward mobility.

The WTRU may stop monitoring the serving cell and may transmit a complete message (e.g., an RRC reconfiguration complete message) to the non-serving cell, for example upon receiving (e.g. successfully receiving) a handover command from the non-serving cell.

The WTRU may prioritize a handover command received from the serving cell over the handover command received from the non-serving cell. For example, if the WTRU receives a handover command from both the serving cell and the non-serving cell, and the contents of the handover commands are different, the WTRU may prioritize the handover command received from the serving cell. The WTRU may stop monitoring for a handover command from the non-serving cell, for example if the WTRU receives an RRC message from the serving cell, if the WTRU did not receive a handover command from the non-serving cell within a preconfigured amount of time, and/or if the target cell is no longer a potential candidate (e.g., non-serving cell quality is lower than serving cell quality, and the like).

The WTRU may monitor two or more non-serving cells (e.g., within the same measurement gap or in different measurement gaps) for the handover command. The WTRU may report the non-serving cells to the serving cell in a measurement report. The WTRU may monitor the non-serving cells after sending the measurement report.

The WTRU may perform UL access in the non-serving cell for forward mobility. To perform UL access in the non-serving cell, the WTRU may be configured to acquire resources in the non-serving cell, for example, by transmitting an UL signal (e.g. RA preamble or SRS) to obtain the resources in the non-serving cell. The configuration for the UL signal may be obtained using one or more of broadcast signaling from the non-serving cell, dedicated signaling common to one or more non-serving cell(s), a grant from non-serving cell, and/or the like.

The configuration for the UL signal may be obtained via broadcast signaling from the non-serving cell. The WTRU may obtain configuration of resources (e.g. time, frequency, preamble resources, and the like) used to access non-serving cell based on broadcast signaling from the non-serving cell (e.g. SIBx). The broadcast configuration may be specific to forward mobility. The broadcast configuration may be common for initial access and forward mobility (e.g. CBRA resources). For example, the WTRU may be configured to use prioritized random access configuration (e.g., with respect to access barring, power ramp up, etc.) for forward mobility. The WTRU may be configured to read the broadcast signaling upon determining that the non-serving cell may be a potential candidate for forward mobility. Such provisioning of resources for forward mobility may be useful in a network (e.g. an ultra-dense network) with multiple overlapping cells, where the overhead of dedicated CFRA resources may be prohibitive.

The configuration for the UL signal may be obtained via dedicated signaling common to one or more non-serving cell(s). The WTRU may obtain a dedicated CFRA configuration for forward mobility access in one or more non-serving cells (e.g., valid for non-serving cells within a RAN area). The WTRU may receive reconfiguration of multiple CFRA resources associated with forward mobility. The WTRU may determine a CFRA resource to use for forward mobility based on the serving beam, serving coreset, serving BWP, the non-serving cell beam, non-serving coreset, the non-serving BWP, a coreset, and/or a BWP. The dedicated CFRA resource set signaling and selection procedure may be beneficial for WTRUs with low mobility or a well-defined path (e.g. drones, high speed trains etc.).

The configuration for the UL signal may be obtained via grant from non-serving cell. The WTRU may be configured to monitor control channel in the non-serving cell to obtain a DCI that grants resources for UL transmission during forward mobility. For example, the WTRU may receive configuration of coreset and/or CRNTI to monitor in the non-serving cell. The configuration may be specific to a procedure. For example, the WTRU may monitor a preconfigured coreset and/or CRNTI reserved for the forward mobility purpose. The configuration may be RAN area specific.

Upon acquiring UL resources in the non-serving cell, the WTRU may transmit an RRC message to identify itself and request forward mobility. For example, the RRC message may correspond to an RRC resume message. The WTRU may be configured to transmit the forward mobility indication in a payload part of a first UL transmission that may include a preamble and a payload (e.g. 2-step RACH). The WTRU may indicate the reason for resume as forward mobility by setting the cause value appropriately.

The WTRU may indicate an urgency degree/level associated with forward mobility in the resume message. For example, the WTRU may indicate this is a best effort forward mobility or urgent forward mobility. As another example, the WTRU may indicate the quality of the serving cell and/or the status of RLM process in the source cell. This may enable the non-serving cell to perform an initial admission control. The WTRU may provide an indication about the active bearers in the serving cell, such that the non-serving cell may perform an initial admission control.

The WTRU may perform one or more actions related to the reception of a response from the non-serving cell. For example, the WTRU may be configured to monitor for a response from the non-serving cell using one or more implementations described herein.

A response from the non-serving cell may be received. If the WTRU receives an RRC resume message from the non-serving cell, the WTRU may consider that the forward mobility is successful, disconnect from the serving cell, and/or apply the reconfiguration according to the resume message.

If the WTRU receives an RRC reject (e.g. RRCreject) message from the non-serving cell, the WTRU may consider that the forward mobility is not successful and may continue operation in the serving cell. If a wait time is included in the reject message, the WTRU may not attempt a forward mobility towards this non-serving cell until the wait time has expired.

The RRC reject message may include redirection info that may, for example, contain the identity of another target cell where the WTRU may perform forward handover. The message may indicate dedicated configuration for the new target cell.

If the WTRU receives an RRC release message (e.g. RRCrelease message) from the non-serving cell, the WTRU may release the RRC connection associated with the serving cell. Releasing an RRC connection associated with the serving cell may include the release of the established radio bearers, the release of the radio resources, and/or entering into an IDLE mode.

The uplink based forward mobility attempt may fail. Upon determining that the attempt has failed, the WTRU may back off from the preamble transmission (e.g., if a back off indication is received from the non-serving cell (e.g. in an RAR message). The WTRU may abort forward mobility to the non-serving cell if a back off indication is received. The WTRU may not consider the non-serving cell for forward mobility until a preconfigured timer expires or the serving cell encounters an RLF.

The WTRU may be configured with a time (e.g. a maximum time) to attempt uplink based forward mobility for a given non-serving cell. The WTRU may start a timer upon initiating uplink based forward mobility towards a non-serving cell. If the uplink based forward mobility is not successful within the expiry of the timer or a number (e.g. maximum number) of preamble transmission attempts are reached, the WTRU may prohibit attempting forward mobility towards that non-serving cell for a preconfigured time. The WTRU may repeat this process towards a different non-serving cell if available. If no additional non-serving cells may be found or may be left, the WTRU may continue operation in the serving cell while searching for a different non-serving cell. If the WTRU finds a non-serving cell in a different RAN area than the serving cell and the serving cell encounters RLF, the WTRU may perform RAN area update in the non-serving cell.

A source connection may be maintained during simultaneous connectivity. In an example, a WTRU may disconnect from the source cell when a handover command (for example, reconfiguration with mobility control info) and/or reconfiguration with sync is received. In examples, a make-before-break approach may be used. The WTRU may maintain the radio link with the source (possibly continue UL and/or DL data transmission/reception), while accessing a target cell (e.g., via random access and establishment of signaling bearers).

In an example, the WTRU may stop the timer T310 when a handover command is received. In examples, the WTRU may perform some level of source link maintenance while accessing target cell during mobility event. For example, the WTRU may continue radio link monitoring towards source cell after a handover command with a make-before-break indication is received. During the period of simultaneous connectivity, if timer T310 associated with source cell expires, the WTRU may not declare RL. The WTRU may be configured to release a source cell connection and continue target cell access.

A T310 timer may be a timer that may be used in a WTRU to control a radio link failure procedure. The timer may be started in RRC when one or more out-of-sync indications may be received from a lower layer, such as a PHY layer. If one or more in-sync indicators are not received before the expiry of the timer, a radio link failure may be declared by the WTRU. The T310 may be the T310 timer used in LTE, 5G NR, and the like

In examples, the WTRU may continue beam failure detection towards a source cell after a handover command is received. Upon detecting a beam failure, the WTRU may release a source cell connection. The WTRU may perform a beam failure recovery towards the source cell, for example, when an ultra-reliable low latency communications (URLLC) bearer is configured.

In examples, the WTRU may be configured to stop a system information (SI) update request towards source cell during a period of connectivity (e.g. simultaneous connectivity). The WTRU may release a buffer status report (BSR), suspend the BSR, schedule a request, and/or random access (RA) preamble in the source cell.

In examples, the WTRU may stop a BWP switch timer during the period of connectivity (e.g. simultaneous connectivity), suspend a measurement gap configuration associated with source cell, release a DRX configuration, enter non-DRX mode, and/or the like.

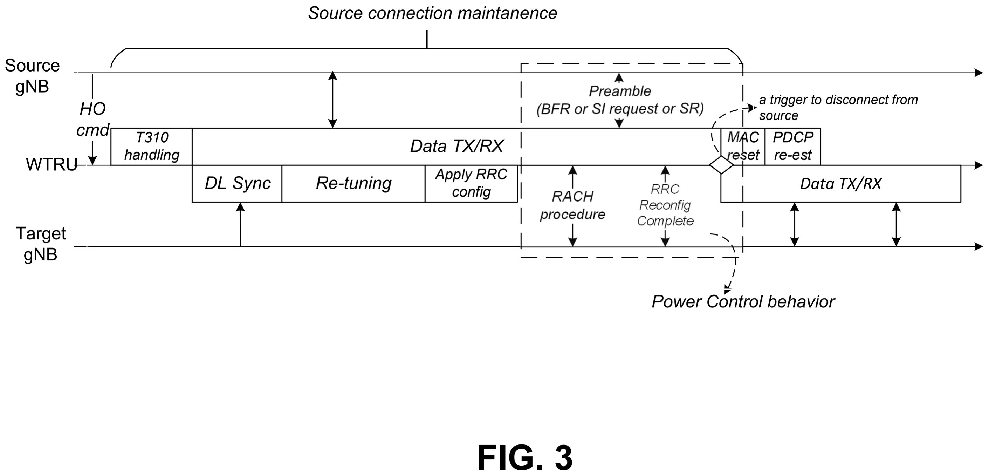

FIG. 3 shows an example embodiment for providing simultaneous connectivity and WTRU behavior related to source connection maintenance after a HO command may be received. As shown in FIG. 3, a WTRU may have a connection to a source gNB and may establish a connection to a target gNB. The WTRU may receive a handover command (HO cmd). The WTRU may perform T310 handling. The WTRU may transmit data and may receive data with the Source gNB. The WTRU may perform source connection maintenance with the source gNB. A DL sync, a RF re-tuning, and/or an RRC configuration application may be performed between the WTRU and the target gNB.

Power control behavior may be performed. For example, a preamble may be sent and received between the source gNB and the target gNB. The preamble may be a BFR, a SI request, or a SR. A RACH procedure and/or an RRC reconfiguration procedure may occur between the target gNB and the WTRU. The WTRU may determine a trigger to discount from the source. A MAC reset may be performed. A PDCP reestablishment may be performed. Data may be sent and received between the WTRU and the target gNB.

As shown in FIG. 3, after reception of a handover command, the WTRU may start to perform source connection maintenance as described herein. The WTRU may prepare for a target cell reception including acquisition of a downlink synchronization, re-tuning the RF, and the like. The WTRU may apply the RRC configuration associated with the target cell and may prepare for an initial UL transmission in the target cell. For example, this may include preamble transmissions, zero or more retransmissions, transmission of an RRC reconfiguration complete message, DL/UL data transmissions, and the like in the target cell. During this period, when one or more UL transmissions in the target cell overlaps with source cell transmissions, the WTRU may apply power control behavior as described herein. The WTRU may perform source connection maintenance procedure until the source connection is released either based on WTRU based triggers and/or based on explicit control message from the target cell.

Power control may be performed during connectivity (e.g. simultaneous connectivity). A WTRU may apply a power control behavior (e.g. a specific power control behavior) during the period of connectivity (e.g. simultaneous connectivity )associated with a mobility event. For example, such behavior may be associated with sharing the power between the transmissions associated with source MAC instance and a target MAC instance. For example, such behavior may include prioritizing transmissions associated with a MAC instance (e.g. a specific MAC instance) when such transmissions at least partially overlap in time. Prioritization may be enforced by preconfigured rules and/or parameters.

Power may be adjusted based on priority associated with transmissions during mobility. In an example, the WTRU may be configured such that higher priority may be given to transmissions associated with the target MAC instance. For example, the WTRU may allocate power such that access (e.g. successful access) to target cell is prioritized. Such transmissions may correspond to target cell access during a handover event, for example, preamble transmissions, RRC complete message transmissions, and the like.

In one or more examples, the WTRU may apply prioritization to one or more transmissions based on an impact of those transmissions to data interruption. The WTRU may prioritize transmissions that may assist in meeting data interruption requirements. For example, the WTRU may prioritize power allocation to an UL URLLC data transmission and/or feedback to DL URLLC transmission with a source cell when such transmission may at least partially overlap with a target cell access.

In one or more examples, the WTRU may apply prioritization to transmissions based on the status of radio link monitoring process. For example, if the T310 timer associated with a source cell is running and/or if one or more OOS indications are above a threshold, WTRU may prioritize the target cell access over data transmissions in the source cell. The WTRU may be configured to apply prioritization based on the status of target cell access. For example, the WTRU may prioritize target cell transmissions if random access may be completed.

In one or more examples, the WTRU may enforce a prioritization by applying a power level associated with a given transmission as a function of one or more of the aspects described herein. A power level may be one of a minimum guaranteed power; a maximum power; a target power; the remaining power following, for example, a first round of power allocation; and/or the like.

Power control behavior during a mobility event may be configured. In one or more examples, RRC signaling may trigger a mobility event configuring power control behavior during connectivity (e.g. simultaneous connectivity). For example, the WTRU may obtain from a handover command one or more configuration aspects for coordinating power allocation between a source and a target MAC instance during simultaneous connectivity. A default WTRU behavior may be defined if such configuration may not have been provided in the handover command. For example, a default WTRU behavior may be to prioritize transmissions associated with target MAC instance. The configuration parameters may include guaranteed power for transmissions associated with source MAC instance, guaranteed power for transmissions associated with target MAC instance, power control mode, and the like.

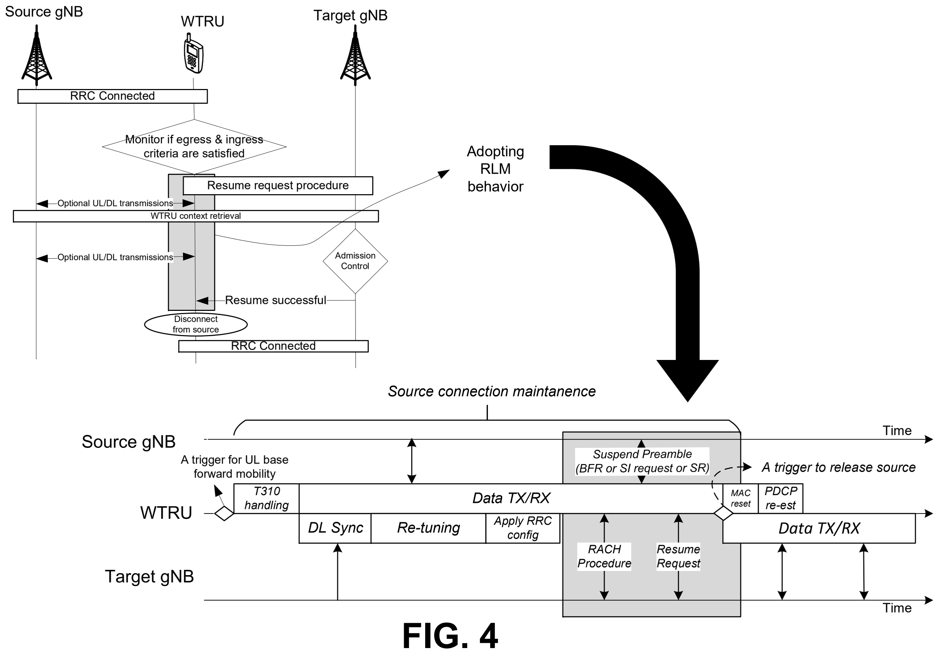

FIG. 4 shows an example embodiment for providing uplink based forward mobility and UE behavior during simultaneous connectivity that may occur. The WTRU may be RRC connected to source gNB. The WTRU may monitor if one or more egress and/or ingress criteria may be satisfied. The WTRU and the target gNB may perform a resume request procedure. The UL transmissions and/or DL transmissions may be sent and received between the source gNB and the WTRU. A WTRU context may be retrieved. The WTRU context may be retrieved from the source gNB, the WTRU, and/or the target gNB. The target gNB may perform admission control. The target gNB may notify the WTRU that the resume may have been successful. The WTRU may disconnect from the source gNB. The WTRU may be RRC connected to the target gNB.

As shown in FIG. 4, a WTRU may have a connection to a source gNB and may establish a connection to a target gNB. The WTRU may determine a trigger for UL base forward mobility. The WTRU may perform T310 handling. The WTRU may transmit data and may receive data with the source gNB. The WTRU may perform source connection maintenance with the source gNB. A DL sync, a RF re-tuning, and/or an RRC configuration application may be performed between the WTRU and the target gNB.

Power control behavior may be performed. For example, a preamble may be sent and received between the source gNB and the target gNB. The preamble may be a BFR, a SI request, or a SR. A RACH procedure and/or a resume request (e.g. an RRC resume request) procedure may occur between the target gNB and the WTRU. The WTRU may determine a trigger to release the source. A MAC reset may be performed. A PDCP reestablishment may be performed. Data may be sent and received between the WTRU and the target gNB.

## Claims

1. A method, implemented in a wireless transmit/receive unit, WTRU, comprising:
monitoring downlink signals of a serving cell;
receiving, from the serving cell, a first message comprising configuration information indicating one or more conditions on the serving cell for starting to monitor a target cell;
based on the one or more conditions on the serving cell, monitoring for a second message from the target cell comprising first information indicating a handover command from the target cell; and
on condition of receiving the handover command indication from the target cell, stopping monitoring downlink signals of the serving cell, and transmitting, to the target cell, a third message comprising second information indicating handover completed.

2. The method of claim 1, wherein the one or more conditions on the serving cell comprise one or more deteriorations of the serving cell quality.

3. The method of claim 2, wherein the one or more deteriorations of the serving cell quality are based on at least one of: a status of radio link monitoring, one or more serving cell quality measurements, and a control channel performance.

4. The method of any of the claims 1 to 3, wherein monitoring for the second message occurs during times when reception of signals from the serving cell is not required.

5. The method of any of the claims 1 to 4, wherein monitoring for the second message comprises monitoring physical downlink control channel, PDCCH, in the target cell and decoding the monitored PDCCH.

6. The method of claim 5, wherein monitoring PDCCH and decoding the monitored PDCCH comprise using a radio network identifier of the target cell in the decoding.

7. The method of any of claims 1 to 6, further comprising stopping monitoring the downlink signals of the serving cell and transmitting the third message, on condition of a successful integrity check of the handover command indication from the target cell.

8. The method of any of claims 1 to 7, further comprising ignoring the handover command indication, and stopping monitoring for the second message from the target cell, on condition of an integrity check of the handover command indication received from the target cell failed

9. A wireless transmit/receive unit, WTRU, comprising a processor, a transceiver unit, and a storage unit, and configured to:
monitor downlink signals of a serving cell;
receive, from the serving cell, a first message comprising configuration information indicating one or more conditions on the serving cell for starting to monitor a target cell;
based on the one or more conditions on the serving cell, monitor for a second message from the target cell comprising first information indicating a handover command from the target cell; and
on condition of receiving the handover command indication from the target cell, stop monitoring downlink signals of the serving cell, and transmit, to the target cell, a third message comprising second information indicating handover completed.

10. The WTRU of claim 9, wherein the one or more conditions on the serving cell comprise one or more deteriorations of the serving cell quality.

11. The WTRU of any of claims 9 and 10, wherein monitoring for the second message occurs during times when reception of signals from the serving cell is not required.

12. The WTRU of any of the claims 9 to 11, wherein monitoring for the second message comprises monitoring physical downlink control channel, PDCCH, in the target cell and decoding the monitored PDCCH.

13. The WTRU of claim 12, wherein monitoring PDCCH and decoding the monitored PDCCH comprise using a radio network identifier of the target cell in the decoding.

14. The WTRU of any of the claims 9 to 13 further configured to stop monitoring the downlink signals of the serving cell, and transmit, to the target cell, the third message, on condition of a successful integrity check of the handover command indication from the target cell.

15. The WTRU of any of the claims 9 to 14, further configured to ignore the handover command indication and stop monitoring for the second message from the target cell, on condition of an integrity check of the handover command indication received from the target cell failed.
